# EUROPEAN PATENT SPECIFICATION

(11) **EP 2 501 972 B1**
(45) Date of publication and mention of the grant of the patent: **31.12.2014**
(21) Application number: 10809206.5
(22) Date of filing: 12.11.2010
(51) Int. Cl.: F16L 3/26, H02G 3/04, H02G 3/06

(54) **CABLE TRAY**
KABELTRASSE
CHEMIN DE CÂBLES

(30) Priority: 18.11.2009 TR 200908738; 11.11.2010 TR 201009381
(43) Date of publication of application: 26.09.2012
(73) Proprietor: KIRAÇ METAL ÜRÜNLERI SAN. VE TIC. LTD. STI, 26000 Eskisehir (TR)
(72) Inventor: MALÇOK, Serkan, 26000 Eskisehir (TR)
(86) International application number: PCT/TR2010/000221
(87) International publication number: WO 2011/062567

(56) References cited:
- EP-A1- 1 056 176
- EP-A2- 2 234 230
- DE-U1-202004 019 942
- DE-U1-202008 009 852
- DE-U1-202009 006 602

## Description

### The Related Art

The invention relates to cable carrying components used for cable circulation (carrying) in industrial facilities, tunnels, infrastructure facilities, workplaces, shopping centres etc. all kinds of living and transportation spaces.

The invention particularly relates to the cable trays having high endurance obtained by being combined in a quick and safe manner via the connection regions formed at its both ends.

### The Prior Art

Since demand for energy is increasing each day, transmission of energy from one place to another has also gained importance. Especially, circulation of the energy cables is of great importance for companies such as industrial facilities, shopping centres etc., wherein energy is intensively used. Therefore, cable trays are used for carrying the said energy transmission cables within these enterprises. The said cable trays are preferred in industrial facilities where high technology systems are used and in business centres such as shopping malls in order to prevent the visual pollution caused by these cables and also to ensure safety of the cables. Cable trays are installation components, which facilitate laying of many cables through them, and which thus both ensure safety of the cables and eliminate visual cable pollution. In cable tray systems, by combining more than one tray piece, it is possible to mount trays in desired lengths. Physical dimensions and raw material thicknesses of cable trays vary according to the number of cables, which will be laid through them, and the weight of these cables. The number and the purpose of the cables to be laid through a cable tray play active role in determining the properties of cable trays to be used. Cable trays are generally placed in places where people can not reach and frequent maintenances are not possible. Moreover, it is also possible for the cables installed into the cable trays to be negatively affected by physical conditions (dusk, water, etc.) which may occur in time due to medium conditions when cable trays are used in outdoor spaces such as tunnels or in the cable trays used in the industry. Cover is placed on cable trays both used inside enterprises and at outdoor spaces in order to protect the cable trays against the negative impacts of dust, water etc. external factors. The most important factor for choosing cable trays is their capability of quick mounting. This is because, increase in the number of operators and the time spent for mounting the tray system creates extra cost for enterprises. Cable carrying components are generally made of metal or plastics. In order to build up the cable carrying system, cable carrying components - cable trays and rotational accessories - are connected to each other from their long ends via suitable connection means. Connection pieces, bolts, connection tabs etc. materials are used as connection means. Mounting of the cable carrying components are difficult, since the connection means have to be brought to the area of operation as additional accessories besides the cable carrying components and the person conducting the mounting operation has to bring the two cable carrying components into the proposed mounting position and at the same time combine the connection components with cable carrying components. Therefore, connection means are used on the said cable trays, which are fixed during installation. In the applications related to the prior art, usage of additional pieces for connection of the trays together brings additional costs and thus damage economy and natural resources. Moreover, it causes economic burden to the final user in terms of transporting and mounting. Besides, usage of clips during the pre-mounting also brings extra workload to the operator. As the operator carries additional pieces to be used for connection of the trays, an extra workload is formed during mounting. In the prior art, studies are made in order to make connection of cable trays with each other in a faster manner by using less number of components. For example, in the utility model with no DE202009006602, application of which is filed by GGK Company, and which discloses the preamble of claim 1, it is aimed to provide quicker connection of cable trays with each other. However, the said application also causes many problems in industrial application phase. The upper part of the gaps at the connection regions being open causes reduction of the product strength and the said parts are prone to bending and deformation in case of small bumps during mounting or transportation. Also, the locking tabs formed at the base part damages the cables and mounting operators placed inside the tray. Besides, the structure of the base form found in different applications of the prior art can not increase strength to desired levels. For example, in the European patent application with no EP1056176, since the strength improver forms formed at the tray carrying base have 90° perpendicularity, tearing and breaking may occur during tray production. As a result of the analysis made, it is aimed to eliminate all of the drawbacks of the prior products. These problems would be solved via the cable tray, which is described in Claim 1.

When the improvements and the patent applications made in the prior art are analyzed, the need for a cable tray, by which all of the drawbacks of the prior cable tray designs are eliminated, and which is easy to mount and strong, and the inadequacy of the prior solutions in the known status of the art have necessitated improvement in the related technical field.

### Brief Description of the Invention

The present invention relates to a cable tray, which meets the above said requirements, eliminates all of the drawbacks and brings about some additional advantages.

From the known status of the art, the object of the invention is to provide a cable tray, which provides a safe pre-connection via the locking system it comprises, which both easily combines the trays one after another and does not give damage on the cables carried inside the trays.

From the known status of the art, the object of the invention is to provide conduction of tray connection operation easily and quickly by the mounting operator. Since the trays fit into each other, their mounting is easily made with a single hand. Any additional piece, clip, or extra mounting component is not needed while the trays are mounted to each other.

Another object of the invention is to prevent the cables found inside the cable trays from being affected by negative conditions (dust, water etc.) which may occur in time due to the medium conditions in the cable trays used in the industry or outdoor spaces such as tunnels.

Another object of the invention is to provide a cable tray which has maximum durability with a minimum thickness. The said cable tray has a much more durable structure via the horizontal and vertical forms formed at the connection regions of the trays and the additional holes opened below the connection gaps.

Another object of the invention is to prevent the cables to be placed inside the tray from being deformed, since the locking means formed at the cable tray connection regions are formed in a downwards exploded manner. Also, the said locking means being in a downwards exploded manner increases the durability of the tabs. At least 10 to 15 times locking is possible with the said means (whereas the locking means used in the structures of the prior art are observed to be deformed and become functionless after a few times of locking).

Another object of the invention is to improve the strength of the tray via the forms extending along the carrying base.

Another object of the invention is to make layout of the tray on the console by taking the H-type latitudinal forms into consideration, which are formed in the carrying base, and which increase the strength. The said H-type forms: improve the carrying capacity and strength of the tray by balancing the load distribution to be loaded on the tray and provides safety. Tensions occurring in all of the form structures found in the prior art are eliminated via the H-type forms (angular).

Another object of the invention is to improve the strength via the horizontal forms formed on the side walls and extending along the wall.

Another object of the invention is to obtain high endurance by formation of the structures on the base in an angular manner. In this way the tension occurring due to structure is minimized.

In order to achieve the above said objects, the invention relates to cable tray, which is formed in order to provide circulation of cables used with the purpose of energy and data transmission inside building structures with various purposes, and which comprises at least one carrying base, side walls extending longitudinally along both sides of the said carrying bases, the first and the second connection regions added on top of each other in order to obtain a tray channel with any desired length by addition of trays one after other, connection gap in the first connection region in order to provide placement for the second connection region of the other tray from above, at least one connection means in the second connection region, and horizontal and vertical support forms formed at both sides of the said connection gap, and the locking tabs formed in a downwards exploded way at the second connection region interlock with the locking gaps found at the first connection region during connection.

In order to achieve the above said advantages which will be better understood from the detailed description below, the present invention; brings many advantages through its said characteristics.

The structural and characteristic features of the invention and all advantages will be understood better in detailed descriptions with the figures given below and with reference to the figures, and therefore, the assessment should be made taking into account the said figures and detailed explanations.

### Brief Description of the Figures

For better understanding of the embodiment of present invention and its advantages with its additional components, it should be evaluated together with below described figures.
Figure 1, is the perspective view of the cable tray, which is the subject of the invention.
Figure 1a, is the detail view (Detail A) of the first connection region of the cable tray, which is the subject of the invention.
Figure 2, is the perspective view (from a different angle) of the cable tray, which is the subject of the invention.
Figure 2a, is the detail view (Detail B) of the second connection region of the cable tray, which is the subject of the invention.
Figure 2b, is the C-C section view of the cable tray, which is the subject of the invention.

### Reference Numbers

10. Carrying base
11.Tray side wall
12. Latitudinal base forms
13.Longitudinal base forms
14. Longitudinal side wall upper inflections
15. Strength improver gaps
16.Captive nut (connection means)
17. Longitudinal side wall forms
18. Locking tabs
19. Locking gaps
20.First connection region
21. Second connection region
22. Connection gap
23. Bolt gap
24. Horizontal support form
25.Vertical support form
26. Secondary hole

### Detailed Description of the Invention

In this detailed description, the details of the cable tray, which is the subject of the invention, will only be disclosed for better understanding of the subject, and will not form any limiting effect.

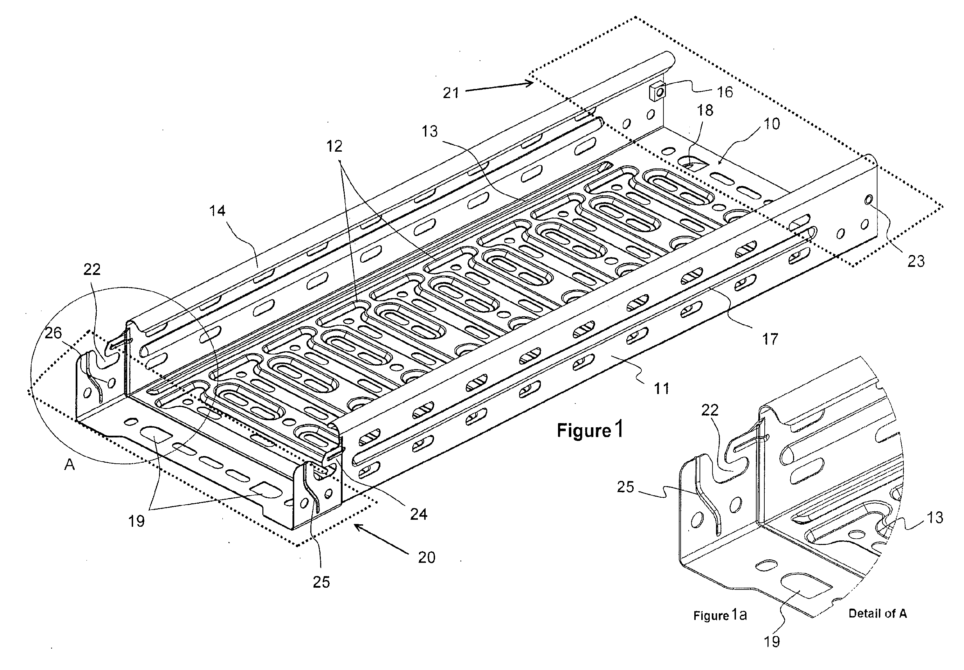

In Figure 1, the perspective view of the cable tray, which is the subject of the invention, is given. Cable trays are preferred in order to prevent the cables, which circulate inside buildings in order to provide energy and data transmission in structures with various purposes, from impairing the building aesthetics and due to their various technical benefits. Cable trays are generally formed of a carrying base (10) and side walls (11), which rise at both sides of the said carrying base (10), and which are perpendicular to the said base (10). H-type latitudinal base forms (12) homogeneously distributed on the said base (10) and longitudinal base forms (13) in two equally distributed positions on the base (10) are found in order to improve the latitudinal strength and the carrying capacity of the cable tray. H type latitudinal base forms (12) provide the said cable tray with high durability. The H-type latitudinal base forms (12) obtained as a result of the computer supported simulation studies and the real trial tests of the produced sample provide a much more durable cable tray even with thinner sheets than the prior base forms with higher sheet thicknesses. Again it is another important strength improving factor to have longitudinally laid base forms (13). However, it is important to have the said forms (12, 13) without a perpendicular angle to the base (10), and therefore, the said non-perpendicular angular structural forms prevent occurance of breaking on the said base (10). Moreover, strength improver gaps (15), which reduce latitudinal flexion of the tray and provide strength against possible shocks from the sides, are formed at the wall (11) part of the said cable tray. Besides, the longitudinal side wall forms (17), which increase the longitudinal strength and carrying capacity and reduce the flexion of the cable tray and provide strength to it against possible shocks from sides, lay parallel to the said carrying base (10) on the said side walls (11). In order to increase the longitudinal strength and carrying capacity and reduce the flexion of the cable tray and to provide strength to it against possible shocks from sides, longitudinal side wall upper inflections (14) are formed at the upper parts of the said side walls (11) along the wall (11).

In Figure 1a, the detail view of the first connection region (20) of the cable tray, which is the subject of the invention, is given. Desired tray length can be obtained by addition of the said trays one after another. It is quite important to conduct connection of the trays with each other in a quick and strong manner. During connection of the trays with each other, the second connection region (21) of a tray is inserted from above to the first connection region (20) of another tray. The connection means (16) - preferably captive nut is used - found in the second connection region (21) is fitted from above to the - preferably L-shaped - connection gap (22) found at the first connection (20) region of the other tray. Afterwards fitting of the tray in this gap (22) is ensured by pushing it in the longitudinal axis of the tray. The reason of naming the nut, which is used as the connection means (16), as captive nut is because of the nut being produced together with the tray during the production phase of the tray. In this way, the operator is prevented from losing time during mounting. Since the connection gap (22) has a radiused L-shape, the trays are interlocked to each other in a way that it is not possible to remove the tray from its place by a movement of the tray in vertical direction. Tight fitting is ensured by pushing of the R8 "L" mouth, which provides first fitting, easily by the operators. Besides, the connection becomes tighter via a connection means - preferably bolt - which would be fitted through the bolt gap (23). After this fitting, the locking operation of the locking tabs (18), which set square the right connection and provide reference for the other combining components, minimize the risk of accidents by preventing separation of the trays during connection of the trays, and provide straight mounting by minimizing the imbalances, breakings, and elevation differences in the connection of said trays, is conducted. A tight fitting is obtained by fitting of the locking tabs (18) found at the second connection region (21) of a tray into the locking gaps (19) found at the first connection region (20) of the other tray. Since the locking tabs (18) are produced in a downwards exploded manner, they have easy bending property and at the same time, they do not form any protrusion at the upper part of the base (10). The locking tabs' (18) not forming protrusion at the upper part of the tray base (10) is for preventing the cables to be placed at the base (10) from being damaged, which is a significant novelty for mass production. At the same time, the mounting operators are also prevented from being harmed due to the said protrusions. The locking tabs (18) found as downwards exploded form can be bent easily by the operator providing a tight fitting. The tab's (18) having downwards exploded form is very important for being able to make the bending operation several times. If it is not in downwards exploded form, the tab would be broken after a few inflections and thus become useless.

The strength of the tray is reduced, since the top of the radiused L-shaped connection gap (22), which is formed at the first connection region (20) of the tray, and which facilitates easy fitting, is open. Therefore, support forms (24, 25) are formed in vertical and horizontal positions at both sides of the said gap (22). In case of not having the said support forms (24, 25), the tray would not have any strength. Again in order to increase strength, secondary hole (26) is opened at one side of the vertical support form (25), which was formed at the other side of the gap (22). In case of not having the said hole (26), the durability of the tray would be reduced significantly.

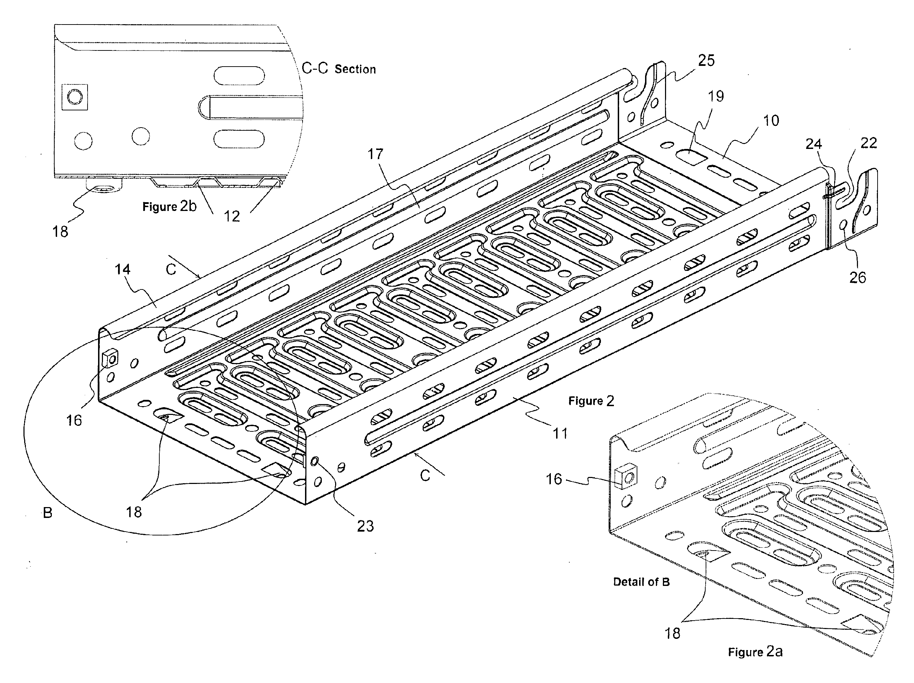

In Figure 2, the perspective view (from a different angle) of the cable tray, which is the subject of the invention, is given. In Figure 2a, the Detail B is given. The captive nut (16) found in the second connection region of the tray makes the work of the operator quite easy. Fixation will be made by tightening of the nut after connection of the trays by the operator without needing any additional apparatus. Again the structure of the locking tabs (18) is shown clearly in this figure (Figure 2a). The form structures of the H-type forms (12) lying latitudinally on the base (10) are also seen in this figure. The said forms (12) are formed with a certain angle instead of being formed perpendicularly. Formation of the forms (12) with an angle is to prevent possible breaking in the base (10). In the C-C section view given in Figure 2b, the angular structure of the said forms is better understood.

In alternative embodiments of the invention, cable trays in different sizes and geometric structures can be formed. All of these alternative embodiments are within the area of the cable tray, which is the subject of the invention.

In other preferred embodiments of the invention, cover can be placed on the tray in order to protect the cables found in the tray from external impacts. The protection area of the invention is determined by the claims and it can not be limited only to the embodiments shown in the figures.

## Claims

1. A Cable tray, which is formed in order to provide circulation of cables used with the purpose of energy and data transmission inside building structures with various purposes, which comprises at least one carrying base (10), side walls (11) extending longitudinally along both sides of the said carrying bases (10), a first and a second connection regions (20, 21) added on top of each other in order to obtain tray with the desired size by addition of trays one after another, a connection gap (22) in the first connection region (20) in order to provide placement of the second connection region (21) of the other tray from above, and at least one connection means (16) in the second connection region (21), and it is **characterized in that**; it comprises horizontal and vertical support forms (24, 25) formed at both sides of the said connection gap (22), and locking tabs (18) formed in a downwards exploded way at the second connection region (21) interlock with locking gaps (19) found at the first connection region (20) during connection.

2. A cable tray according to Claim 1, and it is **characterized in that**; it comprises secondary hole (26) formed for improving strength near the vertical support form (25) at the lower part of the said connection gap (22).

3. A cable tray according to Claim 1, and it is **characterized in that**; in order to improve the latitudinal strength and the carrying capacity of the cable tray, it comprises H-type latitudinal base forms (12) homogeneously distributed on the said base (10) and longitudinal base forms (13) in two equally distributed positions on the base (10).

4. A cable tray according to Claim 3, and it is **characterized in that**; the said H-type latitudinal base forms (12) and the said longitudinal base forms (13) have angular structures in order to prevent formation of tension because of the structure.

5. A cable tray according to Claim 1, and it is **characterized in that**; the first and the second connection regions (20, 21) are formed in a way that they would form a strong connection.

## Patentansprüche

1. Eine Kabelpritsche, die installiert ist, um den Umlauf von Kabeln zum Zwecke der Energie- und Datenübertragung in Bauwerken mit unterschiedlichen Zwecken zu gewährleisten, und die mindestens eine Tragplatte (10), in Längsrichtung entlang beider Seiten der gesagten Tragplatten (10) verlaufende Seitenwände (11), jeweils am Kopfteil des anderen angebrachte erste und zweite Verbindungsstellen (20,21) zwecks Erhaltung einer Pritsche von gewünschter Größe durch Aneinanderfügen von Pritschen, einen Verbindungsspalt (22) in der ersten Verbindungsstelle (20), um die Platzierung der zweiten Verbindungsstelle (21) der anderen Pritsche von oben zu ermöglichen, und mindestens eine Verbindungsvorrichtung (16) in der zweiten Verbindungsstelle (21) enthält, **dadurch gekennzeichnet, dass** die Kabelpritsche an beiden Seiten des gesagten Verbindungsspalts (22) angebrachte horizontale und vertikale Stützplatten (24, 25) und Verschlusshaken (18) enthält, die in einer abwärts auseinandergezogenen Weise an der zweiten Verbindungsstelle (21) angebracht sind und mit den an der ersten Verbindungsstelle (20) befindlichen Verschlussspalten (19) während der Verbindung ineinandergreifen.

2. Eine Kabelpritsche nach Anspruch 1, **dadurch gekennzeichnet, dass** sie nahe der vertikalen Stützplatte (25) am unteren Teil des gesagten Verbindungsspalts (22) ein sekundäres Loch (26) enthält, das zur Verbesserung der Festigkeit gebildet wurde.

3. Eine Kabelpritsche nach Anspruch 1, **dadurch gekennzeichnet, dass** sie auf der gesagten Tragplatte (10) gleichmaßig verteilte querlaufende Grundplatten vom H-Typ (12) und auf der Tragplatte (10) in zwei gleich verteilten Positionen längslaufende Grundplatten (13) enthält, um die Querfestigkeit und die Tragfähigkeit der Kabelpritsche zu verbessern.

4. Eine Kabelpritsche nach Anspruch 3, **dadurch gekennzeichnet, dass** die gesagten querlaufenden Grundplatten vom H-Typ (I2) und die längslaufenden Grundplatten (13) einen winkeligen Aufbau haben, um baubedingte Spannungsbildungen zu verhindern.

5. Eine Kabelpritsche nach Anspruch I, **dadurch gekennzeichnet, dass** die ersten und die zweiten Verbindungsstellen (20, 2I) so gestaltet sind, dass sie eine starke Verbindung bilden.

## Revendications

1. Un chemin de câbles, formé afin d'assurer la circulation des câbles utilisés et ainsi l'énergie et la transmission des données a l'interieur des structures du batiment avec divers objectifs, qui comprennent au moins une base portante (10), des murs latéraux (11) s'étendant longitudinalement le long des deux côtés des dites bases portantes (10), une première et seconde régions de connexion (20,21) ajoutées l'une sur l'autre pour obtenir un chemin selon la taille désirée via l'addition des chemins l'un après l'autres, un espace vide de connexion (22) dans la première région de connexion (20) afin de positionner la seconde région de connexion(21) de l'autre chemin au-dessus, et il y a au moins une connexion (16) dans la seconde région de connexion (21), **caractérisée en ce qu'**elle possède des formes de support à la fois horizontales et verticales (24,25) des deux extrémités des dits espaces vides de connexion (22), et les ergots de verrouillage (18) de façon éclatée vers le bas au niveau de la seconde région de connexion (22) s'imbriquent avec les espaces de verrouillage (19) fondés pendant la connexion à la première région de connexion (20).

2. Le chemin de câbles selon la revendication 1, **caractérisé en ce qu'**il comporte un trou secondaire (26) formé pour améliorer la force à proximité de la forme verticale de support (25) au niveau de la partie faible du dit espace vide de connexion (22).

3. Le chemin de câbles selon la revendication 1, **caractérisé en ce qu'**il améliore la force latitudinale, et la capacité de support du chemin de câbles comprend des formes de base latitudinale de type H (12) distribuées de façon homogène sur ladite base(10) et des formes de base longitudinale (13) distribuées en deux positions égales sur la base (10).

4. Le chemin de câbles selon la revendication 3, **caractérisé en ce qu'**il possède des formes de base latitudinale de type H (12) et par lesdites formes de base longitudinales (13) qui ont des structures angulaires afin d'empêcher la formation de tension à cause de la structure.

5. Le chemin de câbles selon la revendication 1, **caractérisé en ce que** les première et seconde régions de connexion (20,21) sont formées de telle manière à produire une forte connexion.
